## Europäisches Patentamt

## European Patent Office

## Office européen des brevets

(11) Veröffentlichungsnummer: **0 077 850**
**A1**

(12) **EUROPÄISCHE PATENTANMELDUNG**

(21) Anmeldenummer: 81109134.7

(22) Anmeldetag: 28.10.81

(51) Int. Cl.³: **A 01 B 13/02**
A 01 B 49/02, A 01 B 51/04

(43) Veröffentlichungstag der Anmeldung:
04.05.83 Patentblatt 83/18

(84) Benannte Vertragsstaaten:
BE DE FR GB NL SE

(71) Anmelder: Mezögepfejlesztö Intezet
Krisztina Körut 55
Budapest 1(HU)

(72) Erfinder: Kurucz, László, Dipl. Ing.
Karolina u. 51
Budapest XI(HU)

(72) Erfinder: Serlegi, Kálmán, Dipl. Ing.
Remény u. 32
Budapest XIV(HU)

(72) Erfinder: Novoth, Antal, Dipl. Ing.
Tardoskedd u. 3
Budapest XI(HU)

(72) Erfinder: Harmath, Adám
Kalap u. 4
Budapest III(HU)

(72) Erfinder: Balogh, Géza, Dipl. Ing.
Iker u. 6
Budapest XVIII(HU)

(72) Erfinder: Bödör, Miklós
Almos Vezér ut 48
Budapest XIV(HU)

(72) Erfinder: Gutper, László
Csertö u. 18-20
Budapest(HU)

(74) Vertreter: Bardehle, Heinz, Dipl.-Ing.
Herrnstrasse 15 Postfach 260251
D-8000 München 26(DE)

(54) Bodenbearbeitungsmaschine.

(57) Eine Bodenbearbeitungsmaschine, vorzugsweise zu Grüngemüse-Kulturen, dient in erster Linie zur Zubereitung und Planierung der Gemüsebeete auf Ackerboden. Diese Bodenbearbeitungsmaschine ist mit dem an eine Kraft-Zugmaschine anschliessbaren Anhängerahmen (1), einem spurgestaltenden Organ (5), einer Beetplaniervorrichtung (4), sowie einer Werkzeuggarnitur versehen, welche die zur Bodenbearbeitung erforderlichen einzelnen Werkzeuge enthält. Als Bodenbearbeitungswerkzeuge sind furchenziehende Öffnerköpfe (2) oder serienweise aus zur Bodenplanierung dienenden, jene ersetzende Bodenhobelmesser (18) vorgesehen. Die Vorrichtung für Bodenplanierung nähert sich - in der Fahrtrichtung gesehen - von vorne nach hinten der Bodenoberfläche, hat räumlich ausgestaltet einen polygenalen Querschnitt und ist eine Planierplatte (4), die in der Fahrtrichtung gesehen mit ihrem Mittelabschnitt am Aufhängerahmen (1) angehängt wird.

Fig. 1

Fig. 3

EP 0 077 850 A1

BODENBEARBEITUNGSMASCHINE

Die Erfindung betrifft eine Bodenbearbeitungsmaschine,
hauptsächlich für die Grüngemüse-Bestellung von Ackerböden und in diesem Rahmen vor allem zu zwei Funktionen:
das Vorbereiten der sog. Grünzeug-Gemüsebette und die Einebnung des Bodens. Eine bekannte Bodenbearbeitungsmaschine
hat zum Anschluss an eine Zugmaschine einen Anhängerahmen,
sowie ein mit dem Anhängerahmen verbundenes Spurführungs-
-Arbeitsorgan, eine bettglättende Vorrichtung, sowie eine
Garnitur von Bodenbearbeitungswerkzeugen, deren Einzelstücke
leicht und vorteilhaft angebracht oder ausgetauscht werden
können.

Die Züchtung von Grüngemüse auf Ackerboden, erfolgt so wie
in der Gartenwirtschaft, auch auf Gemüsebeeten. Dieser Art
der Gemüsezüchtung kann jedoch nur denn wirtschaftlich betrieben werden, wenn hierzu die nötigen leistungsfähigen
Bodenbearbeitungsmaschinen zur Verfügung stehen. Das Ausgestalten der Gemüsebeete wird allgemein in zwei Phasen
durchgeführt. Im ersten Arbeitstakt werden mit Schürfköpfen
oder Scheiben der Furchen gezogen; der Boden wird ausgehoben
und auf die sog. Beetdecke geschüttet. Im zweiten Arbeitstakt werden dann die Beetdecken und die Furchen einplaniert,
und damit kommt die endgültige Beetform zustande. Diese
beiden Arbeitsphasen können mit zwei getrennten Arbeitsmaschinen in zwei Arbeitsgänge, aber auch nur mit einer
einzigen Arbeitsmaschine in einem Arbeitsgang durchgeführt
werden, wenn sie mit den Arbeitsgeräten für beide Manipulationen ausgestattet ist.

Von den Maschinen zur Herstellung von Gemüsebeeten hat jede
eine Einheit für Beetaufschüttung und für Beetplanierung.

- *2* -

Die Werkzeuge für Beetaufschütten und Furchenziehen sind Rahmenkonstruktionen, welche der ganzen Arbeitsbreite der Maschine entsprechen und mit einer Vorrichtung für Tiefenbegrenzung versehen sind. Der Beetplanierer besteht aus dem Werkzeug für Bodeneinebnung, Spurführung und einer gleichfalls der ganzen Maschinenbreite entsprechenden Rahmenkonstruktion. Es ist üblich sowohl den Beetaufschütter, wie auch den Beetplanierer als aufgehängte Arbeitsmaschine auszubilden. Zahlreiche derartige Maschinen wurden in den Vereinigten Staaten entwickelt.

Eine im Prinzip ähnliche Lösung beschreibt die AU-PS 401 333, bei welcher die Maschine zusätzlich mit einer universalen Fixiereinrichtung zum Zusammenfassen der Rahmenbestandteile versehen, dass sie sich zugleich auch dazu eignet, um darin Schäfte der Werkzeuge zu befestigen. Die Befestigungsorgane mit Keilen bieten die Möglichkeit, die Werkzeuge für die verschiedensten Stellungen einzustellen.

Eine ähnliche Maschine ist aus der HU-PS 164 644 bekannt. Das gemeinsame Merkmal – zugleich auch ihr einziger Mangel – der in zwei Arbeitsgängen die Gemüsebeete zubereitenden Maschine besteht darin, dass sie sehr schwer gebaut und kostspielig ist.

Wegen der obenerwähnten Mängel der in zwei Arbeitsgängen erarbeitenden Gemüsebeet-Zubereiter, wurde in der letzten Zeit versucht eine solche Bodenbearbeitungsmaschine zu bauen, welche alldiese Funktionen in einem einzigen Arbeitsgang verrichtet. Solche Maschinen superponieren eigentlich nur die Arbeitsverrichtungsmittel der in zwei Takten arbeitenden Beetbereitmaschinen und besitzen dementsprechend Werkzeuge für das Furchenziehen, Planieren und die Spureinhaltung. Ausserdem sind sie mit Tiefenbegrenz-Vorrichtung versehen, haben einen alldas zusammenfassenden Rahmen von ganzer Maschinenbreite, sowie ein Fahrgestell zum Transport.

Solche Maschinen wurden als gezogene Maschinen in den USA, sowie in aufgehängter Ausführung auch in Ungarn gebaut. Hinsichtlich der Investitionskosten waren diese Eintakt--Maschinen billiger als die Zweitakt-Beetzubereiter; ihr Betrieb jedoch war wesentlich unwirtschaftlicher, da bei letzteren eine starke Zugkraft erforderlich war, und sie deshalb nur mit Hochleistungstraktoren kombiniert werden könnten.

Die Arbeitsmaschinen für Beetzubereitung sind auch mit einem Planierorgan versehen, welches eine Bodenschicht von der Bodenoberfläche vor der Maschine herschiebt und aufstaut. Von dieser aufgestauten Erdmenge wird ein Teil in die Bodenvertiefungen geschoben, während der Planierer den überschüssigen Erdanteil unter sich hindurchgehen lässt.

Der Planierer kann durch Überwindung des Zugwiderstandes nur dann mit einem minimalen Energieaufwand fortbewegt werden, wenn die aufgestaute Erdmenge genau soviel beträgt, als zur Ausfüllung der Vertiefungen im Boden erforderlich ist. In der Praxis aber konnte das nie verwirklicht werden, denn dazu wären Fühlorgane nötig, welche ständig die Grösse der vorliegenden Bodenvertiefungen wahrnehmen, ferner noch diesen beigeordnete, automatische Erdabhebvorrichtungen besitzen. Alldas würde die Maschine überaus verteuern. Anstatt dessen wurden als bekannte einfache Lösung Tiefenbegrenzungs--Organe angewendet, die ansich zwar einfach konstruiert sind, sich jedoch zum Abfühlen und Wahrnehmen der aufgestauten Erdmenge nicht eignen.

Eine entsprechende Qualität der Bodenplanierung versucht man so zu erreichen, dass mit dem Planierungsorgan mehr Erdboden als nötig aufgestaut wird; wenn dann der ständig steigende Widerstand schon fast die Zugkraft des Traktors erreichte, hob der Traktorfahrer mit Hilfe der Aufhängvorrichtung die Arbeitsmaschine an, und liess die überschüssige Erdmenge unter dem Planierer durch. Dieses Verfahren ist jedoch nicht gut, da es mit grosser Energieverschwendung verbunden ist und auch die Bedienung der Zugmaschine, das Fahren umständlich und schwierig macht.

Hier will die Erfindung Abhilfe schaffen. Die Erfindung, wie sie in den Ansprüchen gekennzeichnet ist, löst die Aufgabe, eine Bodenbearbeitungsmaschine zu schaffen, welche imstande ist, in einem einzigen Arbeitsgang die Beete für Gemüsekulturen zuzubereiten und die Bodenplanierung durchzuführen, dabei aber die obigen Mängel der Eintakt-Beetzubereitungs-maschine vermeidet, ausserdem keiner umständlichen Bedienung und keiner starken Zugkraft bedarf, und welche an Eigengewicht leichter als die bekannten Vorschläge ist.

Der Grundgedanke der Erfindung beruht auf den Erkenntnissen, die gesondert, wie auch in gegenseitiger Wechselwirkung gleichermassen ein minimales Konstruktionsgewicht und demzufolge auch eine minimale Zugkraft ergeben. Der mechanische Teil der Erkenntnis besteht darin, dass sich durch die in den Boden ziehende Wirkung der furchenden Werkzeuge, der Planierung auf die Bodenoberfläche stützt, somit also auch als Tiefenbegrenzer wirken kann. Daher ist für diese Funktion kein Sondergerät erforderlich, denn das gewünschte Gleichgewicht der Arbeitsmaschine stellt sich auch ohne ein solches von selbst ein. Die konstruktive Erkenntnis bestand darin, dass wenn der Planierer selbsttragend ausgestaltet, und die Maschine in aufgehängter Gestalt ausgeführt wird, es nicht nötig ist, einen Rahmen in der ganzen Breite der Maschine anzufertigen. Es genügt einen Aufhängerahmen in der Mitte der Maschine vorzusehen, um diesen dann an die Zugmaschine anzuhängen. Zu dieser Erkenntnis gehört ferner, dass anstelle der Aufschliessköpfe besser Bodenhobelmesser an der selbsttragenden Planierplatte angebracht werden können, wodurch dann der Anwendungsbereich des Gerätes noch mehr erweitert wird. Das Weglassen der tiefenbegrenzenden Organe ist auf den "Selbstregulier-Charakter" der Maschine zurückzuführen, die sich aus der Wahl des Schwerpunktortes und
der angehängten Verbindung mit der Kraftmaschine ergibt.

Die durch die Erfindung erreichten Vorteile sind im wesentlichen darin zu sehen, dass sie zufolge ihrer Konstruktionsgestaltung ein so geringes Eigengewicht hat, dass auch die
benötigte Zugkraft auffallend gering ist. Schon die aufgehängte Ausgestaltung machte jedes Fahrgestell überflüssig,
und ermöglicht dadurch eine erhebliche Gewichteinsparung.
Die Schwerpunktlage der Arbeitsmaschine ist so gewählt, dass
die Planierplatte immer nur die zur Planierung unumgängliche
notwendige Erdmenge aufstaut und vor sich einher schiebt.
Dies dient gleichermassen zu einer weiteren Verminderung
der Zugkraft und zu einer Vereinfachung der Bedienung. Ebenso
wird der Bedarf an Zugkraft auch dadurch ermässigt, dass
sich die Form der Aufschliessköpfe der Form der zu ziehenden
Furche anpasst, mit dieser praktisch übereinstimmt, und deswegen die Köpfe beim Aufschliessen keine überflüssigen Bodenbewegungen verrichten. Diese Köpfe können mit solchen regulierbaren Ablenkansatzstücken versehen werden, die der Planierung
in Querrichtung dienen, sodass vor der Planierplatte weniger
Erde aufgestaut werden muss, da sie nur das Planieren des
in der Fahrtrichtung gelegenen Bodens zu verrichten hat.
Ihrer konstruktiven Ausgestaltung ist es zu verdanken, dass
die Arbeitsmaschine flächemässig eine um 30-50 % grössere
Leistung zu erzielen vermag. Durch das Weglassen der Tiefenbegrenzungsvorrichtungen und des Rahmens in ganzer Arbeitsbreite wird das Gewicht der Maschine um 40-50 % kleiner, so
dass sie voraussichtlich mit 15-20 % weniger Energie betrieben werden kann. Dabei ist ihre Bedienung einfach, mehrfach
zu gebrauchen, kann in die Transportstellung zusammengeklappt und dann leicht weiterbefördert werden.

Im folgenden wird die Erfindung anhand von lediglich Ausführungsbeispiele darstellenden Zeichnungen näher erläutert.
Es zeigt:

Fig. 1 Bodenbearbeitungsmaschine gemäss der Erfindung als
Beetzubereiter im schematischen Querschnitt;
Fig. 2 Bodenbearbeitungsmaschine wie Fig. 1, in Draufsicht;
Fig. 3 Bodenbearbeitungsmaschine gemäss der Erfindung als
Bodenplaniergerät im Querschnitt;
Fig. 4 Maschine wie in Fig. 3, in Vorderansicht;
Fig. 5 Planierplatte, Querschnitt;
Fig. 6 Verbindung zwischen Öffenkopf und Planierplatte;
Fig. 7 Querschnitt des Beetprofils;
Fig. 8 Verbindung des Bodenhobelmessers mit der Planierplatte.

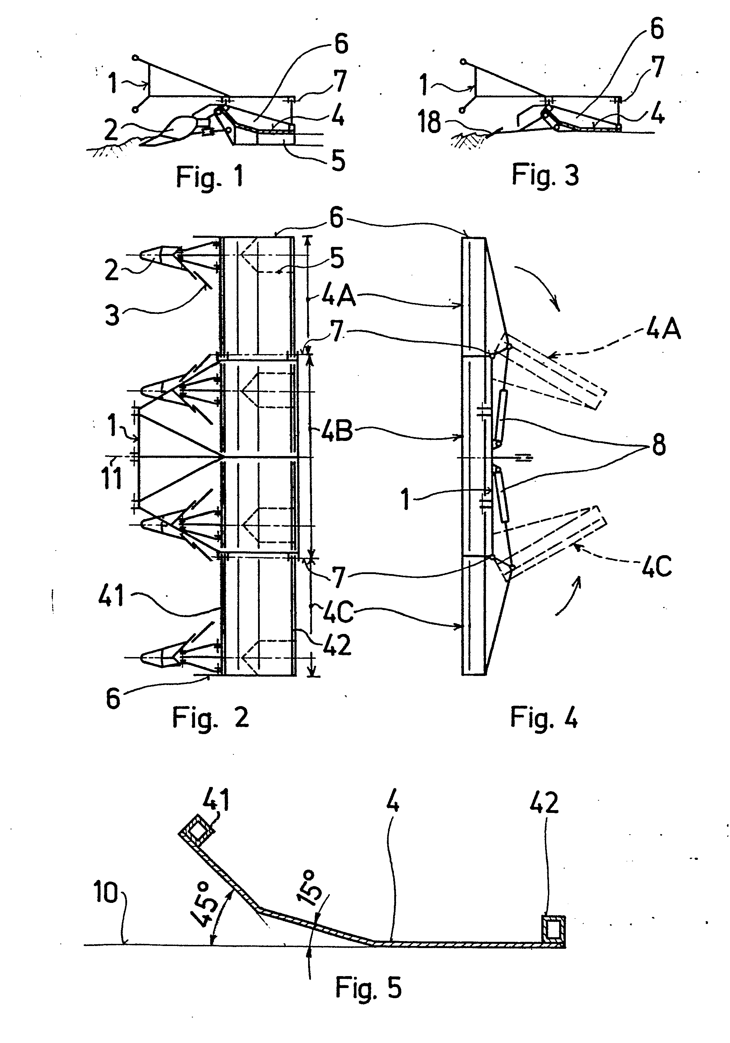

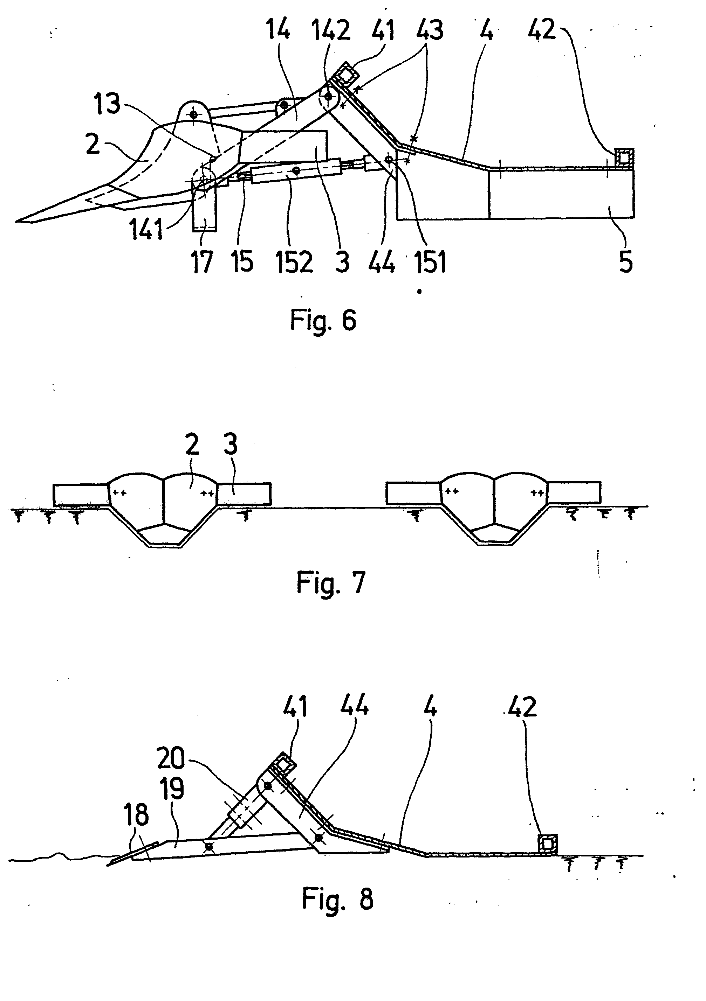

In Fig. 1 und Fig. 2 ist ein Anhängerahmen 1 zu sehen, der
zum Anschluss an eine nicht dargestellte Zug-Kraftmaschine
dient; ferner eine selbsttragend ausgestaltete, und deshalb
die wichtigste quergerichtete Trägerkonstruktion bildende
Planierplatte 4. Das Ausgestalten der Beete besorgen furchenziehende Öffenköpfe 2, während zum Planieren der Beete die
Planierplatten 4 dienen. Den furchenziehenden Öffenköpfen
2 werden zweckmässig Ablenkansätze 3 beigegeben, deren Rolle
aus Fig. 7 klar zu ersehen ist. Hier sieht man nämlich, dass
die Ablenkansätze 3 in der Querrichtung das Planieren der
Beete besorgen. Die an den Seiten der Maschine angeordneten
furchenziehenden Öffenköpfe 2 sind im allgemeinen nur mit
einem Ablenkansatz 3 versehen, während die in der Mitte vorgesehenen Öffenköpfe 2 - wie das in Fig. 2 gut zu sehen ist -
je zwei Ablenkansätze besitzen. Die Planierplatte 4 ist
mit Schuhen 5 versehen, welche die Aufgabe der Spurausgestaltung haben. Die Planierplatte 4 ist - gleichfalls in Fig. 2
gut sichtbar - am Abschnitt 4B, nahe der Fahrspurlinie am
Anhängerahmen 1, und über diesen an der in der Zeichnung
nicht dargestellten Zugmaschine angeschlossen. Quer zur
Fahrtrichtung 11, etwas weiter nach links und rechts entfernt, sind die äusseren Abschnitte 4A und 4C der Planierplatte 4 zu sehen, welche mit dem mittleren Abschnitt 4B
durch Gelenke 7 verbunden sind. Diese Gelenke 7 ermöglichen
es, dass die Abschnitte 4A und 4C beim Transport aufgekippt werden können.

Die räumliche Stellungshaltung der Planierplatte 4 und damit
die der Arbeitsmaschine, wird durch an der Planierplatte 4
befestigte vordere Versteifung 41 und hintere Versteifung
42 gesichert (Fig. 5). Die Planierplatte 4 ist in Fig. 5
im Querschnitt zu sehen. Eine wichtige Eigenheit der Planierplatte 4 besteht darin, dass sie sich - in der Fahrtrichtung
11 gesehen - von vorne nach hinten der Rasenfläche 10 nähert
und zweckmässig einen polygonalen Querschnitt hat.

In Fig. 6 ist in grösserem Massstab der als Beetzubereitungsgerät zusammengebaute wichtigste Teil der Maschine und zwar
der Öffenkopf 2 und die Planierplatte 4 zusammengebaut. Für
ihre Verbindung miteinander dienen Befestigungsschrauben 43,
sowie eine Verbindungsrippe 44. Der Öffnerkopf 2 kann über
ein fixes Anschlussglied 14, sowie über ein einstellbares
Anschlussglied 15 an der Anschlussrippe 44 befestigt, und dadurch auch mit der Planierplatte 4 verbunden werden.

Das fixe Anschlussglied 14 ist an seinem einen Ende mit einem
Gelenk 141 am Öffnerkopf 2, mit seinem anderen Ende über ein
Gelenk 142 an der Anschlussrippe 2 angeschlossen. Auf diese
Weise kann an beiden Enden des Anschlussgliedes 14 eine relative Winkelverdrehung zustande kommen.

In ähnlicher Weise schliesst das einstellbare Anschlussglied
15 mit seinem einen Ende über das Gelenk 141 an dem Öffnerkopf
2, mit seinem anderen Ende aber über ein Gelenk 151 an die
Anschlussrippe 44 an, und steht so mit der Planierplatte 4
in Verbindung. Somit kann auch hier an beiden Enden des Anschlussgliedes 15 eine relative Winkelverdrehung erfolgen.
Die Einstellbarkeit des einstellbaren Anschlussgliedes 15
wird durch eine Schraube 152 mit Gegengewinde ermöglicht,
welche den Abstand zwischen den Gelenken 141 und 151, letzten
Endes also die Länge des einstellbaren Anschlussgliedes 15
reguliert.

Ausser den bisher aufgezählten Geräteteilen kann der Öffnerkopf 2 noch mit einem Anschlag 13, welcher das Rückwärtskippen des Öffenkopfes 2 verhindert, ferner mit einer Fallstütze 17 versehen sein. Letztere hat die Aufgabe, die Öffnerköpfe 2 vor schädlichen Deformationen zu schützen. Es
lohnt sich wenigstens die in der Nähe der Fahrtrichtungsspur 11 befindlichen Öffnerköpfe 2 mit solchen Fallstützen
17 zu versehen. Ebenso sind zweckmässige, ergänzende Hilfsmittel die an den Seiten der Maschine angebrachten Abschlussbleche 6, welche das seitliche Überfliessen der vor der Planierplatte aufgestauten Erde verhindern.

In Fig. 4 und Fig. 4 werden in allgemeiner Anordnung, in Fig. 8
aber in vergrössertem Massstab eine als Bodenplanierer zusammengebaute Variante der erfindungsgemässen Bodenbearbeitungsmaschine gezeigt. An der Planierplatte 4 ist hier eine
Serie von Bodenhobelmessern 18 angebracht, welche an je
einem Messerhalter 19 befestigt sind.

Zum Regulieren des Neigungswinkels der Bodenhobelmesser 18,
und damit der Tiefe ihres Eindringens in den Boden dienen
Messereinstell-Glieder 20. Sowohl die Messerhalter 19, wie
auch die Messereinstellglieder 20 sind gelenkig an der
Verbindungsrippe 44 der Planierplatte 4 angeschlossen. Die
Ränder der Planierplatte 4 sind hier zweckmässig mit Abschlussblechen 6 versehen.

An dem Aufhängerahmen 1 sind (Fig. 4) hydraulische Arbeitszylinder 8 befestigt, die dazu dienen, die äusseren Abschnitte
4A und 4C der Planierplatte 4 an den Gelenken 7 hochzuklappen.

Die erfindungsgemässe Bodenbearbeitungsmaschine kann zur Z-
bereitung der Gemüsebeete und Bodenplanierung gleichermassen
mit einer viel kleineren Zugkraft, und dementsprechend mit
einem viel kleineren Energiebedarf verwendet werden als die
bisherigen Geräte gleicher Bestimmung. Dank der eigenartigen

- 9 -

Ausgestaltung der Planierplatte 4 ist ein Rahmen in der
ganzen Breite der Maschine nicht erforderlich. Die Tiefenbegrenzungsvorrichtungen können wegbleiben. Die Maschine
kann einfach zusammengeklappt und dann leicht transportiert
werden. Zufolge der günstigen Schwerpunktanordnung aber arbeitet das Gerät auch in der Zusammenstellung ohne Öffnerköpfe "selbstregulierend".

BODENBEARBEITUNGSMASCHINE


P A T E N T A N S P R Ü C H E


1. Bodenbearbeitungsmaschine vorzugsweise zu Grüngemüse-
kulturen auf Ackerboden, insbesondere zur Zubereitung
der Gemüsebeete und Bodenplanierung, die mit einem, für
das Anschliessen an eine Zugmaschine geeigneten Anhängerahmen,
einem, an diesem angebrachten Spurhalteorgan, und einer
Beetzurichtungs- und Planierungsvorrichtung, sowie einer
die verschiedenen Bodenbearbeitungs-Einzelwerkzeuge enthaltenden, zweckmässig leicht auswechselbaren Werkzeuggarnitur ausgerüstet ist, dadurch g e k e n n z e i c h -
n e t , dass die Bodenbearbeitungswerkzeuge aus einer Serie
von furchenziehenden Öffnerköpfen (2), die in ihrer Form
den zu schaffenden Furchenquerschnitt angepasst sind, oder
aus einer Serie zum Ersatz der Öffnerköpfe geeigneten, dem
Bodenplanieren dienenden Bodenhobelmessern (18) bestehen, 35271-3307/MJ wobei das Planierorgan als eine - in der Fahrtrichtung
(11) gesehen - sich von vorne nach hinten einer Rasenfläche (10) nähernde räumlich vorzugsweise polygonartig
ausgestaltete Planierplatte (4) ausgebildet ist, die
an ihrem mittleren Abschnitt (4B) am Anhängerahmen (1)
befestigt ist.

2. Bodenbearbeitungsmaschine nach Anspruch 1, bei der
die Planierplatte (4) selbstragend ausgebildet ist, wozu
sie wenigstens an der in der Fahrtrichtung (11) vorderen
Seite mit einer Versteifung (41) und/oder am hinteren Rand
mit einer Versteifung (42) ausgestattet ist.

3. Bodenbearbeitungsmaschine nach Anspruch 2, bei der
der mittlere Abschnitt (4B) der Planierplatte (4) durch
seitliche Abschnitte (4A und 4C) verlängert ist, wobei
zwischen dem mittleren Abschnitt (4B) und den Abschnitten
(4A und 4C) Gelenke (7) vorgesehen sind, die das Hochklappen dieser Abschnitte (4A, 4B) in Transportstellung
ermöglichen.

4. Bodenbearbeitungsmaschine nach Anspruch 1, bei der die
Serien der Öffnerköpfe (2) oder der Bodenhobelmesser (18)
in lösbarer Verbindung, zweckmässig durch Befestigungsschrauben (43) eingesetzt sind.

5. Bodenbearbeitungsmaschine nach Anspruch 4, bei der die
Öffnerköpfe (2) und die Bodenhobelmesser (18), bezogen auf
die Fahrtrichtung (11) quergerichtet, in veränderbarer Stellung angebracht sind.

6. Bodenbearbeitungsmaschine nach Anspruch 4 oder 5, bei
der an der Vorderseite der Planierplatte (4) zum Anschliessen
der Öffnerköpfe (2) oder der Bodenhobelmesser (18) Anschlussrippen (44) vorgesehen sind.

7. Bodenbearbeitungsmaschine nach Anspruch 1, bei der die spurgestaltenden Organe als in der Fahrtrichtung (11) hinten
an der Planierplatte (4) angebrachte Schuhe (5) ausgestaltet sind.

8. Bodenbearbeitungsmaschine nach Anspruch 7, bei der die
spurgestaltenden Schuhe (5) mit den Öffnerköpfen (2) gemeinsame Montageeinheiten bilden und zusammen an der Planierplatte (4) befestigt sind.

9. Bodenbearbeitungsmaschine nach einem der Ansprüche 1-8,
bei der jedem der Öffnerköpfe (2) mindestens ein Ablenkansatzstück (3) beigegeben, von den Öffnerköpfen (2) aber
mindestens der eine mit einer Fallstütze (17) zur Verhinderung der schädlichen Deformation des Öffnerkopfes (2) versehen ist.

10. Bodenbearbeitungsmaschine nach Anspruch 9, bei der jeder
der Öffnerköpfe (2) an der Planierplatte (4) durch ein  fixes
Anschlussglied (14), sowie ein einstellbares Anschlussglied
(15) befestigt ist.

11. Bodenbearbeitungsmaschine nach Anspruch 10, bei der das
einstellbare Anschlussglied (15) zur Längeverstellung einen
Teil z.B. eine Schraube mit Gegengewinde (152) besitzt.

12. Bodenbearbeitungsmaschine nach Anspruch 11, bei der das
fixe Anschlussglied (14) sowohl mit dem Öffnerkopf (2), wie
auch mit der Planierplatte (4) über Gelenke (141, 142) verbunden ist.

13. Bodenbearbeitungsmaschine nach einem der Ansprüche 10-12,
bei der das einstellbare Anschlussglied (15) sowohl mit dem
Öffnerkopf (2), wie auch mit der Planierplatte (4) durch
Gelenke (141, 151) verbunden ist.

14. Bodenbearbeitungsmaschine nach Anspruch 1, bei der ein
jedes der Bodenhobelmesser (18) in einem Messerhalter (19) sitzt, die Messerhalter (19) aber mit einem Messereinstellglied (20) - zum Einstellen des Neigungswinkels für das
Eindringen des Messers in den Boden und damit die Bearbeitungstiefe - versehen sind.

15. Bodenbearbeitungsmaschine nach Anspruch 1, bei der an
den Rändern der Planierplatte (4) Abschlussbleche (6) vorgesehen sind.

16. Bodenbearbeitungsmaschine nach Anspruch 1, bei der der
Schwerpunkt der Arbeitsmaschine, in der Fahrtrichtung (11)
gesehenen, nahe am Vorderrand der Planierplatte (14) liegt.

Fig. 1

Fig. 3

Fig. 2

Fig. 4

Fig. 5

14  142  41  43  4  42

13

2

141

17  15  152  3  44  151  5

Fig. 6

2  3

Fig. 7

41  44  4  42

20
19
18

Fig. 8

Europäisches
Patentamt

EUROPÄISCHER RECHERCHENBERICHT

0077850
Nummer der Anmeldung

EP 81 10 9134.7

| Kategorie | Kennzeichnung des Dokuments mit Angabe, soweit erforderlich, der maßgeblichen Teile | betrifft Anspruch |
|-----------|-----------------------------------------------------------------------------------|-------------------|
| Y | US - A - 1 683 018 (J.E. BODA) <br> * ganzes Dokument * <br> -- | 1,4,5 |
| Y | US - A - 3 387 667 (R.E. RICE) <br> * Spalte 1, Zeile 57 bis Spalte 3, <br> Zeile 13; Fig. 1 bis 5 * <br> -- | 1,4,5 |
| Y | US - A - 3 187 822 (P.J. CLIFFORD <br> et al.) <br> * ganzes Dokument * <br> -- | 1,4,5 |
| Y | US - A - 3 557 883 (B.A. SHADER) <br> * Spalte 1, Zeile 50 bis Spalte 3, <br> Zeile 32; Fig. 2 bis 4 * <br> -- | 1,4,5 |
| A | DE - C - 1 084 505 (W. STOLL) <br> * Fig. 1 to 1c * <br> -- | 9 |
| D,A | AU - B - 401 333 (R. McKAY LTD.) <br> * ganzes Dokument * <br> ---- | 1 |

**EINSCHLÄGIGE DOKUMENTE**

**KLASSIFIKATION DER ANMELDUNG (Int. Cl.³)**

A 01 B 13/02
A 01 B 49/02
A 01 B 51/04

**RECHERCHIERTE SACHGEBIETE (Int. Cl.³)**

A 01 B 13/00
A 01 B 39/00
A 01 B 49/00
A 01 B 51/04
A 01 B 79/00
A 01 C 5/00
A 01 G 1/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---------------|------------------------------|--------|
| Berlin | 21-05-1982 | SCHOFER |

EPA form 1503.1 06.78